# EUROPEAN PATENT APPLICATION

(11) **EP 0 888 855 A2**
(43) Date of publication of application: **07.01.1999**
(21) Application number: 98111598.3
(22) Date of filing: 24.06.1998
(51) Int. Cl.: B29B 17/00, B29C 70/58

(54) **Method for the industrial processing of mixtures of plastic materials**

(30) Priority: 04.07.1997 IT GE970057
(71) Applicant: Induscom & Associati S.r.l., 20122 Milano (IT)
(72) Inventor: Rosmino, Andrea, 16146 Genova (IT); Foresi, Antonio, 16146 Genova (IT)
(74) Representative: Porsia, Attilio, Dr.

(57) **Abstract**

Method for the processing of mixtures of plastic materials, including the steps of: grinding the mixtures of plastic materials and subsequent micronization until the desired particle dimension is obtained; micronization of wood sawdust until the desired particle dimension is obtained; if necessary, mixing of polyolefines with the micronized plastic materials; mixing, homogenisation and heating of the plastic materials and of the wood powder in the respective due proportions, eventually with additional fillers; first cooling of the homogenised product; forming and further cooling; control of the consistency of the obtained product and adjustment of the ratio polyolefines/plastic materials.

## Description

The present invention relates to a method for the processing of mixtures of plastic materials, and in particular it refers to the processing of plastic materials coming from separate refuse collection.

For many years in the world, and lately in Italy as well, the need has been felt to separate from urban solid refuse those portions which are not biodegradable and therefore can produce toxic or environmentally injurious substances during their incineration. This happens, for instance, in the case of various plastic materials which are largely common for everyday use; their separation is made beforehand, both through the so-called separate refuse collection, and through the separation made on the whole of urban refuse. However, even with these precautions it is still difficult to optimise the utilisation of various plastic materials whose characteristics are clearly unsuitable for common treatments; as a matter of fact, thermoplastic polyolefin materials and thermosetting resins can be both present in the same lot.

Generally speaking, these secondary raw materials have always been thought to be used for base products, but in this field, either, the obtained results and the sustained costs were not fully satisfactory. Moreover, a fundamental problem is the unhomogeneity in the characteristics of the product, which are too largely influenced by the starting composition of the recycled material.

The present invention aims at providing a method for the processing of mixtures of plastic materials through which it is possible to obtain a product with certain standardised features, almost without considering the composition of the starting material.

Furthermore, the present invention aims at providing a product which can be used, for example, in the manufacture of pallets, building or formwork planks.

The aim of the present invention is, therefore, a method for the processing of mixtures of plastic materials, including the steps of:
- grinding of the mixtures of plastic material and subsequent micronization till the desired particle dimension is obtained;
- micronization of wood sawdust till the desired particle dimension is obtained;
- mixing, if necessary, of polyolefins with the micronized plastic materials;
- mixing, homogenisation and heating of the plastic materials and of the wood powder in the respective due proportions, eventually with additional fillers;
- first cooling of the homogenised product:
- forming and further cooling;
- checking of the consistency of the product thus obtained and adjustment of the polyolefins/plastic materials ratio.

The particles of plastic materials are preferably reduced to a dimension between 1 and 1500 µm. The powder obtained from the sawdust has got an average dimension between 1 and 300 µm.

The plastic materials and the wood powder are mixed in a proportion ranging from 20 to 80% in weight of plastic materials and 80 to 20% of wood powder. The mixing can precede the heating, or the already melted plastic materials can be mixed with the wood powder.

The polyolefins/plastic materials ratio is adjusted according to the consistency of the obtained product; the polyolefins are preferably kept between 20 and 40% by weight of the whole of the plastic materials which are treated.

Further advantages and features will be evdent from the following detailed description of an embodiment of the present invention, which is carried out as illustrative and non-limiting purpose, with reference to the enclosed drawings, in which:
Figure 1 is a schematic block diagram relating to the operation of a plant according to the method of the present invention;
Figure 2 is a schematic diagram of the plant operating according to the method of the invention, concerning sector II of Figure 1;
Figure 3 is a schematic diagram of the plant operating according to the method of the invention, concerning sector III of Figure 1;
Figure 4 is a schematic diagram of the plant operating according to the method of the invention, concerning sector IV of Figure 1;
Figure 5 is a further embodiment of the plant, again relating to sector IV of Figure 1.

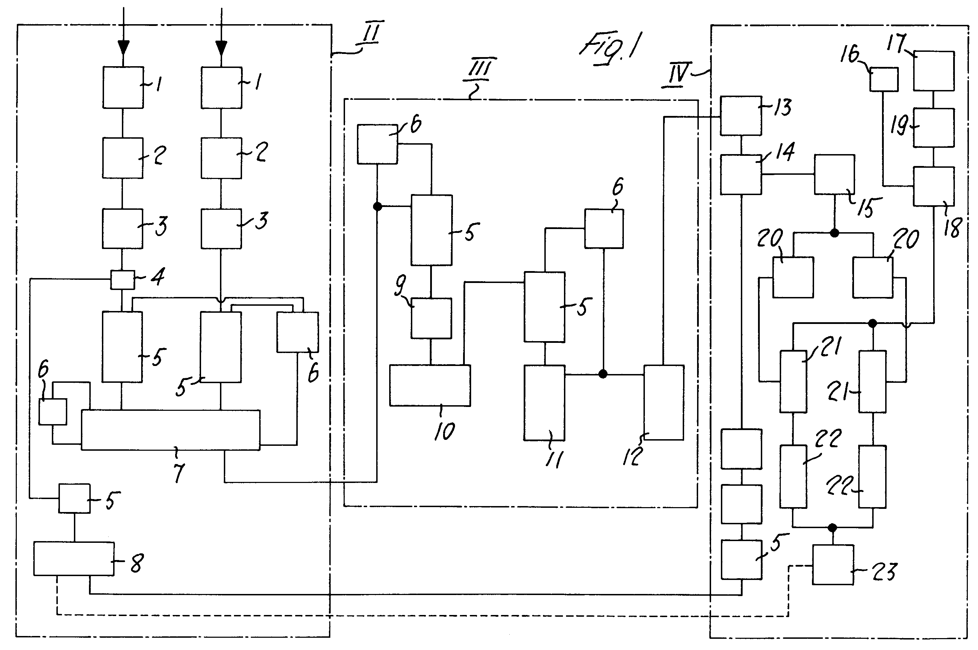

Figure 1 shows the schematization of a possible plant for the processing of mixtures of plastic materials according to the present invention; the scheme can be divided into three parts: in sector II the plastic materials, introduced into the plant through the transport equipments 1, are released from possible ferrous materials through the electromagnetic devices 2, and then undergo a first grinding in the mills 3. From the mills 3 the material is led on two air lines provided with the relative devices 5 to keep down the powders, equipped with the filters 6, to a gathering tank 7. One of the two air lines, with suitable selection on the valve equipment 4, can lead to the tank 8, where only polyolefin material is introduced.

In sector III the micronizing operations of the plastic materials coming from the tank 7 are shown; the ground material undergoes three successive grindings in stations 10, 11 and 12, till the desired powder size is achieved.

Sector IV eventually shows the last steps of the working process according to the method of the present invention; the powders coming from the micronizing phase are mixed with the polyolefines coming from the tank 8 through the mixing equipment 14 and from here they are transferred, through the transferring equipment 15, to the extruders 20. Also the wood powder contained in the tank 17, and possibly mixed with other charges contained in the vessel 16 through the mixing equipment 18, is sent to the extruders 21, where it will be mixed with the product extruded from the extruders 20.

The product is subsequently cooled in stations 22 and formed in station 23, where its consistency is tested and then the quantity of polyolefines to add to the mixture made with the mixing equipment 14 is determined.

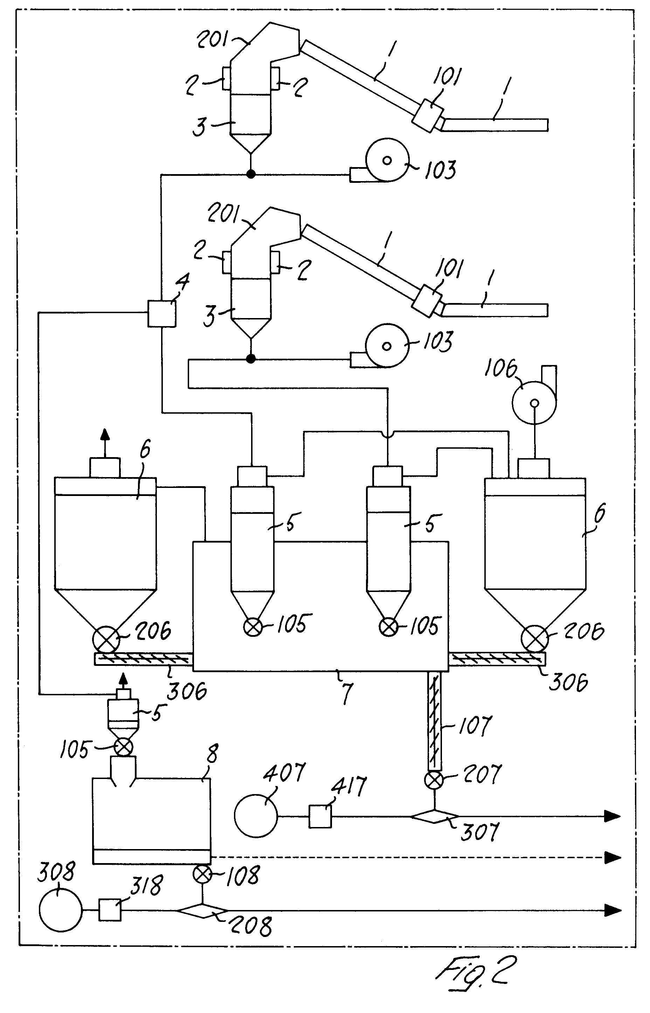

Figure 2 shows in detail the part of the plant which is enclosed in sector II of Figure 1. On two conveyor belts 1 are placed the metal detectors 101 for the detection of possible metals in the mixtures of plastic materials which are loaded in the system. The materials are afterwards introduced into the hoppers 201 on which the electromagnets 2, attracting ferrous components, are placed; the material is then discharged into the mills 3 and introduced into the conduit line through the propulsion generated by the fans 103.

The material is then led to tank 7 where it arrives through two cyclones 5, which are necessary to eliminate the powders resulting from the primary grinding in the mills 3, and which are equipped with a filter 6 in parallel, where an aspirating fan 106 is placed. The powders obtained from filter 6 are then introduced into tank 7 through the screw conveyor 306. Tank 7, too, is equipped with a filter 6 having the same powder-collecting function.

One of the two lines leading to tank 7 is equipped with a valve 4 which allows material to be sent to tank 8 instead of tank 7. On this line the pure polyolefines are introduced which are then added to the mixed plastic materials according to the method of the present invention. From tank 7 the plastic materials are introduced through the screw conveyor 107 and the metering wheel 207 onto another line where they are pushed thanks to the action of pump 407, which is controlled by valve 417, and of Venturi tube 307. The carrying-system for the polyolefine in tank 8 is analogous.

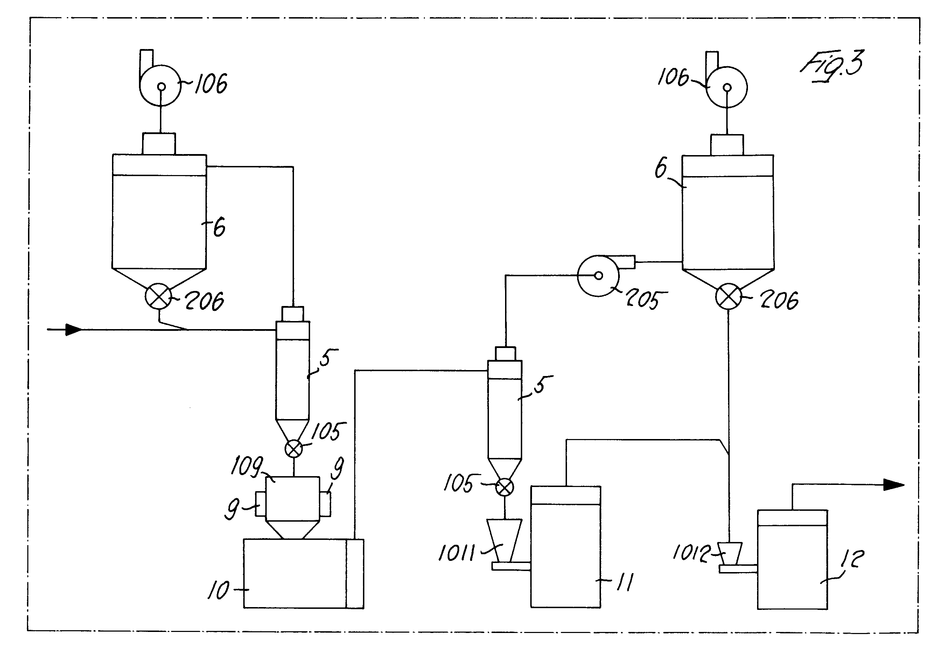

Figure 3 shows the elements of the system which are enclosed in sector II of the scheme of Figure 1. The material coming from tank 7 is conducted, after the material has been led into a cyclone 5 and a relative filter 6, into a multirotor, through a hopper 109 equipped with electromagnets 9. From multirotor 9 the material is then transferred to superrotor 11 through hopper 1011, and from this one, similarly, through hopper 1012 to refiner 12. These three subsequent stages complete the refining phase of recycled plastic materials.

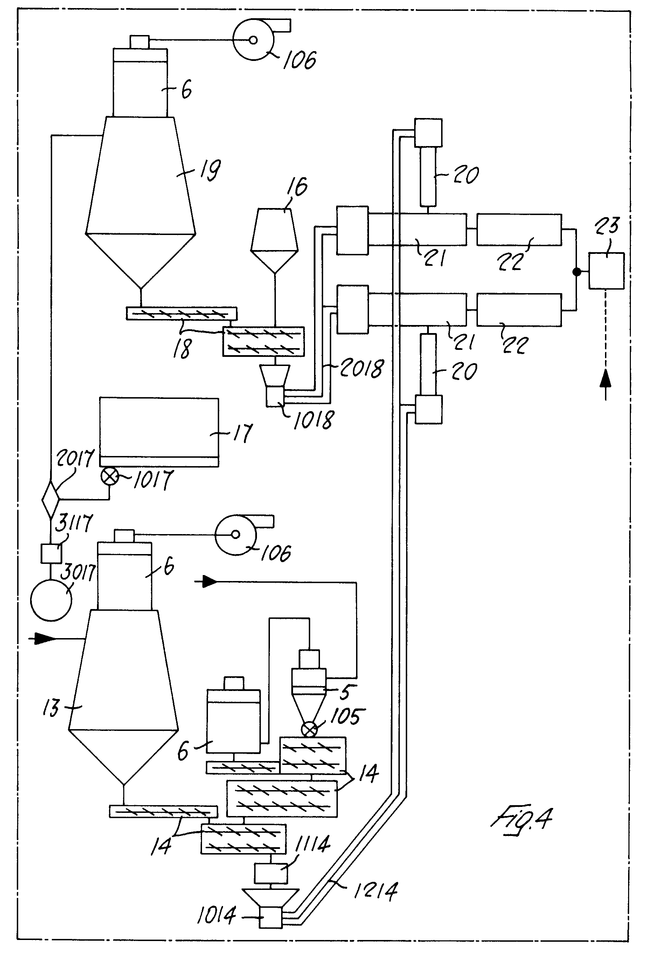

Figure 4 shows the subsequent and final working step according to the present invention, with reference to sector IV of Figure 1. The material coming out of the refining step as showed in Figure 3 is poured into silo 13, equipped with filter 6 to which fan 106 is coupled. From silo 13 the material is transferred to the mixer system 14, where it is mixed with the polyolefine coming from tank 8, which has been poured into the mixer through cyclone 5 equipped with filter 6. Simultaneously, from tank 17 the wood powder is added into a silo 19, through pump 3017, controlled by valve 3117, and through venturi tube 2017. From here it is poured into mixer 18 where it is added to other possible fillers contained in the silo 16, for instance glass fibre.

The plastic powder, appropriately added with polyolefine, is transferred, through riddle 1114, into hopper 1014, and from here to bucket conveyor 1214. Similarly, the wood powder mixed with other fillers is poured into hopper 1018, and from here to bucket conveyor 2018. The wood powder is then introduced into extruders 21, which are also fed by extruders 20, the latter being linked to bucket conveyor 1214. The extrusion product is pre-cooled into chambers 22, and then moulded through mould 23, and further cooled with suitable means (not shown).

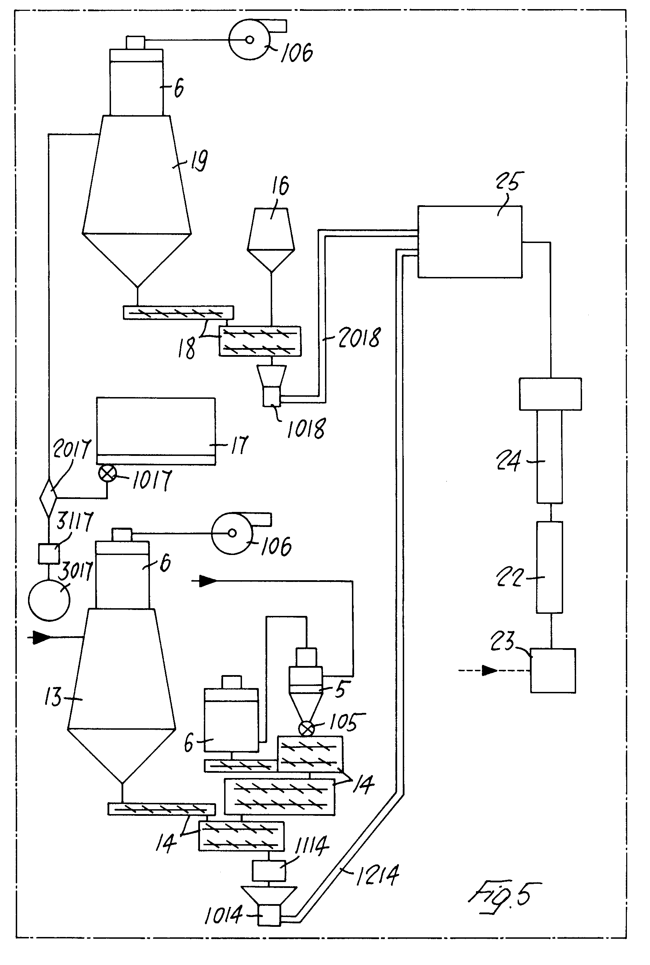

Finally, figure 5 shows an execution variation concerning the plant portion shown in figure 4. The same parts are indicated with the same numbers. In this case, the plastic materials mixed with polyolefine in mixers 14 and the wood powder added to the charges in the mixers 18 are homogenised in the mixer 25 before being sent to extruder 24. The extruded product later undergoes a treatment similar to the previous one, that is, pre-cooling in chamber 22 and forming in mould 23.

The operation of the method according to the present invention will be evident from what follows. The mixtures of plastic material which are worked in the system using the method according to the invention, are reduced to such a dimension (1 to 1500 µm) to make possible, by melting the polyolefine - and therefore thermoplastic - portions, to enclose homogeneously the other materials whose role is that of mere fillers, practically inert.

Obviously, in order to achieve this result, the quantity of polyolefines must not be below a certain level. Generally speaking, an amount of polyolefines in the mixture below 20% do not allow to achieve a final product with the desired consistency.

The wood powder added to the plastic material preferably must not be below 20%, in order to confer the suitable features to the product, that is, the so-called nail holding ability. More than 80% of wood powder would make the product decidedly inconsistent and difficult to be worked.

In the final part of the process the plastic materials can be co-extruded with the wood powder, as in the embodiment shown in Figure 4, or, as in the embodiment shown in Figure 5, they can be pre-mixed with the wood powder and then extruded. In both cases the extrusion temperature should be between 170 and 210°C. In fact, the polyolefines which are present melt perfectly in this temperature interval. The cooling in chambers 22 prevents the onset of tensions in the product mass and it is carried out at a temperature between 100 and 140 C. Later the forming takes place in the usual way in mould 23, duly cooled. It can be an advantage if the forming is carried out through the known process of compression moulding; in this case the mould can be placed onto a one- or multi-storey compression press with hydraulic or electric drive. The compression moulding forming allows the detensioning of the structure of the moulded part. The product coming out of mould 23 can have a consistency which is unsuitable for the uses it has to be bound to, generally, pallet planks, building planks, formwork planks, and therefore the quantity of polyolefine added to the plastic material has to be corrected (see dashed arrow in Figure 1).

The determination of the consistency can be valued differently; if worst, the mere visual evaluation of the product can be enough to establish the adjustment of the polyolefine quantity in the mixture.

The method thus conceived allows to obtain a product with effective possibilities of use in several sectors, starting from very cheap materials, as both the mixed portions of plastic material and the wood powder are wastes.

## Claims

1. Method for processing mixtures of plastic materials, including the steps of:
- grinding of the mixtures of plastic material and subsequent micronization until the desired particle dimension is obtained;
- micronization of wood sawdust until the desired particle dimension is obtained;
- if necessary, mixing of polyolefines with the micronized plastic materials;
- mixing, homogenisation and heating of the plastic materials and of the wood powder in the respective due proportions;
- first cooling of the homogenised product;
- forming and further cooling;
- control of the consistency of the obtained product and adjustment of the ratio polyolefines/plastic materials.

2. Method according to claim 1, in which the particles of plastic materials are reduced preferably to a dimension between 1 and 1500 µm.

3. Method according to claim 1, in which the powder obtained from the wood sawdust has an average dimension between 1 and 300 µm.

4. Method according to any of the claims 1 to 3, in which the plastic materials and the wood powder are mixed in a proportion ranging from 20 to 80% in weight of plastic materials and 80 to 20% of wood powder.

5. Method according to any of the previous claims 1 to 4, in which the polyolefines are between 20 and 40% in weight of the whole of the plastic materials.

6. Method according to any of the previous claims 1 to 5, in which the mixing between wood powder and powder of plastic materials follows the heating of the latter, which is carried out in extruders and takes place by means of co-extrusion.

7. Method according to any of the previous claims 1 to 5, in which the mixing between wood powder and powder of plastic materials is carried out before the heating of the latter, and the homogenised powder is then heated within an extruder.

8. Method according to any of the previous claims, in which the aforesaid heating is carried out at a temperature between 170 and 210°C.

9. Method according to any of the previous claims 1 to 8, in which the aforesaid first cooling is carried out at a temperature between 100 and 140 C.

10. Compounded plastic material based on wood powder, thermoplastic materials, and mixtures of other plastic materials, obtained according the method according to any of the claims 1 to 9.

11. Planks, panels, and similar moulded products made with the product according to claim 10.

12. Method according to any of the previous claims 1 to 9, in which the aforesaid forming is carried out by means of compression moulding, through a one-or multi-storey compression press.
